# EUROPEAN PATENT SPECIFICATION

(11) **EP 3 811 897 B1**
(45) Date of publication and mention of the grant of the patent: **31.08.2022**
(21) Application number: 19796457.0
(22) Date of filing: 30.04.2019
(51) Int. Cl.: A61C 13/00, A61C 9/00, A61C 19/05, A61C 13/34

(54) **THREE-DIMENSIONAL ORAL MODEL ANALYSIS METHOD AND PROSTHESIS DESIGN METHOD INCLUDING SAME**
VERFAHREN ZUR ANALYSE EINES DREIDIMENSIONALEN ORALEN MODELLS UND PROTHESENDESIGNVERFAHREN DAMIT
PROCÉDÉ D'ANALYSE DE MODÈLE BUCCAL TRIDIMENSIONNEL ET PROCÉDÉ DE CONCEPTION DE PROTHÈSE LE COMPRENANT

(30) Priority: 30.04.2018 KR 20180050066
(43) Date of publication of application: 28.04.2021
(73) Proprietor: DDS Company, Geumcheon-gu, Seoul 08591 (KR)
(72) Inventor: RYU, Kuen Chan, Incheon 21359 (KR); LEE, Joongsoo, Seoul 06949 (KR); NOH, Suyoun, Seoul 05010 (KR); MOON, Jung Bon, Busan 48050 (KR); YOU, Dong Hyun, Gyeonggi-do 10518 (KR); JE, Jin Ah, Seoul 01318 (KR)
(74) Representative: M. Zardi & Co S.A.
(86) International application number: PCT/KR2019/005197
(87) International publication number: WO 2019/212228

(56) References cited:
- KR-A- 20100 025 810
- KR-A- 20160 048 805
- KR-A- 20160 083 787
- KR-A- 20170 112 938
- KR-A- 20170 112 938
- KR-A- 20190 051 161
- US-A1- 2010 054 558
- US-A1- 2014 257 763
- US-A1- 2017 325 920

## Description

### BACKGROUND OF THE DISCLOSURE

### Field of the disclosure

The present disclosure relates to a method for analyzing a 3D oral model and a method for designing a virtual prosthesis having the same. In more detail, the present disclosure relates to a method for obtaining oral information by analyzing a 3D oral model and for designing a virtual prosthesis on the basis of the obtained oral information.

### Related Art

Impression in the process of fabricating a dental prosthesis is an important clinical process that is the base of diagnosing a patient by applying the states of teeth and tissues in a mouth and of making a following treatment plan or fabricating an accurate prosthesis.

A common impression method requires selection of an appropriate impression material in accordance with the treatment type and a skilled clinical technique of the treating person for accurate impression. An impression processor may not avoid repeated impression due to various factors such as deformation of an impression body due to wrong selection or using method of an impression material, a vomiting reaction of a patient not related to the skillfulness of the treating person, and trismus. Further, even in the process of fabricating a plaster cast after impression, an error may be caused when a dental prosthesis due to a limit in reproduction of fine parts of a material, friction, etc.

Accordingly, a study for using computers and automating designing and manufacturing for designing or machining dental prosthesis that is manually performed has been conducted.

In detail, a prosthesis manufacturing system that scans the mouth in a digital type using an oral scanner, displays the scanned oral data through 3D modeling, designs a dental prosthesis on the basis of the 3D oral model using a computer, and then manufacturing the designed prosthesis has been actively developed.

In particular, an interest in a prosthesis design technology that displays a modeled oral image in the prosthesis manufacturing system such that a user can easily recognize it, and easily design a precise and very aesthetic prosthesis using the displayed oral image has been increased.

Recently, a prosthesis design system is intended to provide oral information that is helpful for prosthesis design by analyzing oral images through an image analysis tool that is rapidly developed, but there is no image analysis reference for analysis of the entire oral image, so analysis is difficult. In particular, there is a problem that image analysis is almost impossible due to missing information about the entire mouth when analyzing a partial oral image.

Further, a prosthesis design system helps prosthesis design by providing a graphic user interface (GUI) for designing a prosthesis, but most graphic user interfaces designs a prosthesis using drawing that is manual work, so there is a problem in that the quality in prosthesis design depends on the ability of the worker and the work takes an excessive time. KR20170112938, US2010/054558, US2014/257763 are examples of methods for analizing 3d oral model.

### SUMMARY

The present disclosure has been made to solve the problems described above and an object of the present disclosure is to provide a method for analyzing a 3D oral model that sets a reference index for a 3D oral model, acquires accurate oral information by analyzing the oral model on the basis of the set reference index, and models a virtual prosthesis on the basis of the acquired oral information, and a method for designing a prosthesis including the method.

A method for analyzing a 3D oral model according to an embodiment includes: displaying a 3D oral model as an oral image; displaying a reference index together with the oral image; setting the reference index in the oral image; acquiring oral information by analyzing the oral image on the basis of the set reference index; and designing a virtual prosthesis on the basis of the oral information.

According to the method for analyzing a 3D oral model according to an embodiment, it is possible to help intuitionally understand an oral image by displaying a reference index for the oral image when displaying the oral image, and it is possible to accurately acquire various items of oral information required for prosthesis design by analyzing an oral model on the basis of the reference index.

Further, according to the method for analyzing a 3D oral model according to an embodiment, a user can more easily and quickly design a prosthesis by providing a prosthesis design graphic user interface that uses the oral information acquired in this way.

### BRIEF DESCRIPTION OF THE DRAWINGS

FIG. 1 is a block diagram of a physical configuration of a prosthesis design system according to an embodiment of the present disclosure.
FIG. 2 is a block diagram of a functional configuration of a prosthesis design system according to an embodiment of the present disclosure.
FIG. 3 is a flowchart illustrating a 3D oral model analysis process according to an embodiment of the present disclosure.
FIG. 4 shows an image before setting a positional relationship of a reference index and an oral image according to an embodiment of the present disclosure.
FIG. 5 shows an image after setting a positional relationship of a reference index and an oral image according to an embodiment of the present disclosure.
FIG. 6 shows examples of standard archlines according to an embodiment of the present disclosure.
FIG. 7 is a flowchart showing a process of designing a prosthesis on the basis of oral information and an oral image according to an embodiment of the present disclosure.
FIG. 8 shows a prosthesis parameter configuration image according to an embodiment of the present disclosure.
FIGS. 9A and 9B are margin line configuration images of a restoration region according to an embodiment of the present disclosure.
FIGS. 10A and 10B are configuration images in the insertion axis of a prosthesis according to an embodiment of the present disclosure.
FIG. 11 shows an internal parameter configuration image of a prosthesis according to an embodiment of the present disclosure.
FIG. 12 shows a 3D oral model combined with a virtual prosthesis according to an embodiment of the present disclosure.
FIG. 13 is an image providing an interface for correcting a virtual prosthesis according to an embodiment of the present disclosure.

### DESCRIPTION OF EXEMPLARY EMBODIMENTS

The present disclosure may be modified in various ways and implemented by various exemplary embodiments, so that specific exemplary embodiments are shown in the drawings and will be described in detail herein. The advantages and features of the present disclosure, and methods of achieving them will be clear by referring to the exemplary embodiments that will be describe hereafter in detail with reference to the drawings. However, the present disclosure is not limited to the disclosed embodiments and may be implemented in various ways. In the following embodiments, terms such as "first" and "second" are used to discriminate a component from another component without limiting the components. Further, singular forms are intended to include plural forms unless the context clearly indicates otherwise. Further, terms such as "include" or "have" mean that the features or components described herein exist without excluding the possibility that one or more other features or components are added. Further, components may be exaggerated or reduced in size for the convenience of description. For example, the sizes and thicknesses of the components shown the figures are selectively provided and the present disclosure is not necessarily limited thereto.

Hereinafter, embodiments of the present disclosure are described in detail with reference to the accompanying drawings, and in the following description of the accompanying drawings, like reference numerals are given to like components and repetitive description is omitted.

### Summary

A prosthesis design system providing a method for analyzing a 3D oral model according to an embodiment can provide a prosthesis design graphic user interface (CAD) that models a mount in 3D using scan data received by a prosthesis design computing device when the mouth of a patient is scanned and transmitted through an oral scanner, displays the created 3D oral model, and designs a prosthesis on the basis of the 3D oral model.

Further, the prosthesis design system can provide a prosthesis manufacturing data design interface (CAM) that create prosthesis manufacturing data for manufacturing a prosthesis in a prosthesis manufacturing device on the basis of the designed prosthesis data. The prosthesis design system can help intuitive understanding of an oral image by displaying also reference indexes that can help understand the oral model when displaying the 3D model as an oral image, and can accurately acquire various items of oral information for prosthesis design by arranging the positions of the reference indexes in the oral image and then performing 3D oral model analysis on the basis of the reference indexes.

The reference indexes include at least one of a lingual archline, a buccal archline, a mesial boundary, or a distal boundary.

Further, the prosthesis design system can provide a graphic user interface that can easily and precisely design a prosthesis on the basis of the acquired oral information.

In detail, the prosthesis design system provides an interface that can design by sequentially setting parameters of a prosthesis and provides an interface that sets a parameter in each step within a frame that is intuitive and based on oral information. Accordingly, even a non-skilled person can easily design a precise and accurate prosthesis and it is possible to design prostheses with uniform quality without depending on the ability of users.

The prosthesis may refer to an artificial replacement one or more teeth or relevant tissues. For example, when a prosthesis is an implant that is a material functioning as the root of a tooth, the prosthesis may refer to any one or all of a fixture that is inserted into an alveolar bone, an abutment that is connected to the fixture, and a crown that covers the top of the abutment and forms an outer upper portion.

Further, the types of the prosthesis may include inlay, onlay, crown, laminate, bridge, coping, implant, denture, or the like.

Further, the prosthesis, in a broad meaning, may include even tooth-related assistants such as a surgical guide, a brace, and an articulator.

Hereafter, each component of the prosthesis design system is described first in detail.

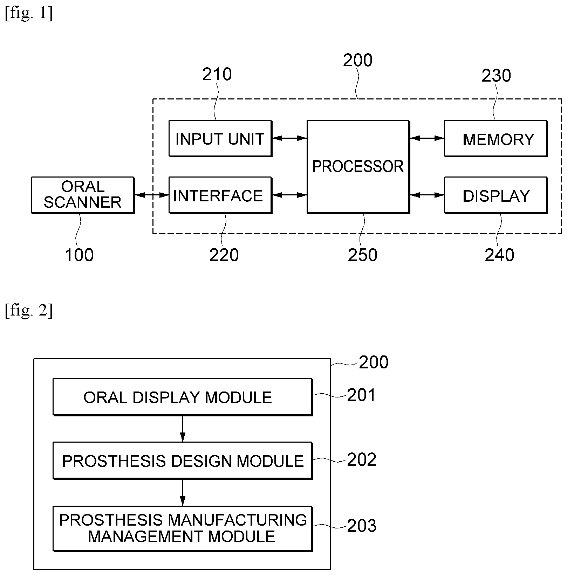

FIG. 1 is an internal block diagram of a prosthesis design system according to an embodiment of the present disclosure.

Referring to FIG. 1, a prosthesis design system according to an embodiment of the present disclosure may include an oral scanner 100 and a prosthesis design computing device 200

### - Oral scanner

First, the oral scanner 100 can acquire scan data for modeling the mouth of a patient in 3D by scanning (e.g., digitally taking an impression) the mouth of the patient.

The oral scanner 100 according to this embodiment transmits scan data obtained by scanning the entire or a portion of a mouth through trigonometry, a laser, an image, or scan technologies to the prosthesis design computing device 200.

Thereafter, the scan data are transmitted to the prosthesis design computing device 200 and the following process until designing a prosthesis is performed in the computing device 200. Before the method for analyzing a 3D oral model is described, each component of the prosthesis design computing device 200 is described first in detail

### - Physical configuration of prosthesis design computing device

Referring to FIG. 1 again, the prosthesis design computing device 200 according to an embodiment may include an input unit 210, an interface 220, a memory 230, a display 240, and a processor 250.

In detail, the input unit 210 can sense execution input that turns on/off the computing device 200, and configuration, execution input, etc. for various functions related to prosthesis design. For example, the input unit 210 ay include various buttons disposed on the prosthesis design computing device 200, may include a touch sensor combined with the display 240, and may include input devices such as a mouse and a keyboard connected through the interface 220.

Further, the prosthesis design computing device 200 may include an interface 220 that transmits/receives data to/from an external device through a wire or wirelessly.

In detail, the interface 220 can serve as a data passage with various kinds of external devices connected to the prosthesis design computing device 200. For example, the interface 220 may be connected with the oral scanner 100 and may receive scan data or transmit various items of configuration input related to scanning, and may be connected with a prosthesis manufacturing device and may manufacture a prosthesis by transmitting prosthesis manufacturing data. Further, the interface 220 may be connected with various devices of the input unit 210 (e.g., a mouse and a keyboard) and may receive input of a user.

The interface 220 may include at least one of a wire/wireless headset port, an external charger port, a wire/wireless data port, a memory card port, a port connecting a device equipped with an identification module, an audio I/O (Input/Output) port, a video I/O (Input/Output) port, and an earphone port. Further, the interface 220 may include a wireless communication module such as Bluetooth or WiFi.

Further, the prosthesis design computing device 200 may include a memory 230.

The memory 230 can store several application programs (or applications) that are driven in the prosthesis design computing device 200, and data and commands for the operation of the prosthesis design computing device 200.

For example, the memory 230 may include a prosthesis design program (CAD) for prosthesis design and may include a prosthesis manufacturing management program (CAM) that creates prosthesis manufacturing data by receiving designed prosthesis data.

In particular, the memory 230 can store image data for acquiring oral information by performing image analysis on a 3D oral model.

The memory 230 may be various storage devices such as a ROM, a RAM, an EPROM, a flash driver, a hard drive in terms of hardware, and may further include a web storage that performs the storage function of the memory 230 on the internet.

Further, the prosthesis design computing device 200 may include a display 240 that displays a graphic image related to prosthesis design.

The display 240 may be integrally mounted on the computing device or may be connected through the interface 220 as a separate display device.

Finally, the prosthesis design computing device 200 may include a processor 250 that executes application programs by controlling the general operation of each unit.

The processor 250 can be realized using at least one of application specific integrated circuits (ASICs), digital signal processors (DSPs), digital signal processing devices (DSPDs), programmable logic devices (PLDs), field programmable gate arrays (FPGAs), controllers, micro-controllers, microprocessors, and electronic units for executing other functions.

At least one or more programs for designing a prosthesis are installed in the memory 230 of the prosthesis design computing device 200, and the processor 250 can provide various functions for designing a prosthesis using these programs.

### - Functional configuration of prosthesis design computing device

FIG. 2 is a block diagram of a prosthesis design system according to an embodiment of the present disclosure.

In detail, referring to FIG. 2, a prosthesis design system may include, in terms of function, an oral display module 201, a prosthesis design module 202, and a prosthesis manufacturing management module 203.

First, the oral display module 201 may provide a function of displaying (240) a 3D oral model through scan data received through the oral scanner 100 or from the outside.

In detail, the oral display module 201 can create a 3D oral model by processing scan data before modeling, and then display the 3D oral model as an oral image allowing for various graphic interfaces.

Further, the oral display module 201 can convert 3D oral model files received from the outside into a format that the prosthesis design module 202 can work with by exchanging them and then can display them into an oral image to which various graphic interfaces can be applied.

Further, the oral display module 201 can acquire various items of oral information by performing image analysis on an oral model or/and an oral image. The oral display module 201 can acquire accurate and various items of oral information by arranging oral images on an archline and analyzing the oral images arranged on the archline.

Thereafter, the oral display module 201 can assist a doctor to more easily understand the oral state of the patient by displaying oral information together with the oral images and can help the prosthesis design module 202 provide a graphic user interface for designing a prosthesis by providing the oral images and the oral information to the prosthesis design module 202.

The oral display module 201 may be included in the prosthesis design module 202, and it is exemplified the prosthesis design module 202 includes the oral display module 201 in the following description.

The prosthesis design module 202 may be referred to as a CAD (Computer Aided Design) and can provide a prosthesis design function that quickly and accurately processes general times of prosthesis design work by constructing a database that enables planning of prosthesis design and making and correcting of drawings to be performed in the optimal state.

Further, the prosthesis design module 202 can also function as the oral display module 202 that helps understanding of a user by displaying data for prosthesis design in the form of oral images and oral information.

As described above, since a prosthesis is designed using a computing system, efficiency can be pursued by reducing the design work time and the cost, the productivity can be improved, and the quality and reliability can be improved.

That is, the prosthesis design module 202 can display a 3D oral model in oral images and can display (240) the oral information acquired from the oral images, and can provide a graphic user interface for designing a prosthesis on the basis of the oral images and the oral information.

Finally, the prosthesis manufacturing management module 203 may be referred to as CAM (Computer Aided Manufacturing) introducing a computer in the field of manufacturing a prosthesis, and may be a technology related to the process of entering a prosthesis design step when prosthesis design is finished in the prosthesis design module 202 and the final design plan is decided.

In detail, the prosthesis manufacturing management module 203 can provide a prosthesis manufacturing management function so that a user can smoothly perform manufacturing management design through a computer in all manufacturing processes such as process planning (manufacturing method and order determination), a manufacturing technology, machining, and sub-design required for machining.

For example, the prosthesis manufacturing management module 203 can form a machining path of a prosthesis through a virtual milling program when the manufacturing device is a milling machine, and can transmit the machining path information and prosthesis manufacturing data to the milling machine.

A user can perform all work from checking oral images to designing a prosthesis and prosthesis manufacturing management through the prosthesis design module 202 and the prosthesis manufacturing management module 203.

### - 3D oral model analysis method

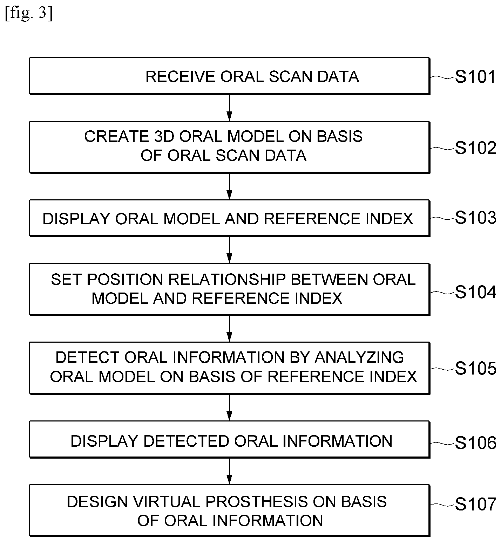

Hereafter, a process in which the prosthesis design module 202 acquires oral information and effectively displays (240) the oral information together with oral image of a 3D oral model is described in detail with reference to FIGS. 3 to 7.

FIG. 3 is a flowchart showing a process in which a prosthesis design system according to the present disclosure displays (240) oral information.

Referring to FIG. 3, first, the prosthesis design module 202 can receive scan data of a mouth from the oral scanner 100 (S101).

In another embodiment, prosthesis design module 202 may load scan data obtained before by scanning a mouth from an external server or the memory 230.

An image, a laser TOF value, the position information of the oral scanner 100, etc., may be included in the oral scan data, depending on the kind of the scanner, and in an embodiment, an image taken through an omnidirectional lens and the position information of the oral scanner 100 may be included therein.

The oral scan data may be scan data obtained by scanning the entire mouth including the upper jaw, the lower jaw, the occlusion surface, etc., may be scan data obtained by scanning one of the upper jaw, the lower jaw, and the occlusion surface, and may be scan data obtained by scanning a partial region of the upper jaw, a partial region of the lower jaw, and a partial region of the occlusion surface.

Meanwhile, the prosthesis design module 202, in order to assist a user to scan a mouth, can simultaneously display a real-time taking image, a captures image, a 3D data image of a single model, and a preview image of combination of 3D data during scanning of a mouth.

When oral scan data is loaded, the prosthesis design module 202 can acquire 3D oral model data by modeling the mouth in 3D on the basis of the oral scan data (S102).

In detail, the prosthesis design module 202 can acquire 3D oral model data by modeling the mouth of a patient in 3D on the basis of the image or/and the position information of the oral scanner 100 included in the oral scan data.

In particular, in an embodiment, the prosthesis design module 202 creates a 3D oral model by matching partial images of a partial region of the upper jaw (or the lower jaw) on the basis of all images obtained by photographing the entire upper jaw (or lower jaw) through an omnidirectional lens, thereby being able to minimize a matching error of the partial images and further improve accuracy of the 3D oral model.

Meanwhile, the prosthesis design module 202 may load 3D oral model data modeled in advance from a server or the memory 230.

Further, the prosthesis design module 202 can match the occlusion relationship of the upper jaw oral model and the lower jaw oral model. Accordingly, when reference indexes are matched to only one oral model of the upper jaw or lower jaw oral model, the prosthesis design module 202 can automatically match the reference indexes even to the other one oral model with a matched occlusion relationship.

In detail, the prosthesis design module 202 can match an occlusion relationship to the upper jaw oral model and the lower jaw oral model on the basis of size information of the mouth, inclination information, scan axis direction information, normal information, dental formula information of a prosthetic tooth input in advance, etc. of the 3D oral model data. The occlusion relationship refers to that the items of position information of the teeth of the upper jaw mouth and the lower jaw mouth are matched. By matching reference indexes in one oral model on the basis of the matched occlusion relationship, it is possible to automatically match reference indexes to the other one oral model.

Next, after the 3D oral model data is created, the prosthesis design module 202 can display an oral image included in the modeled 3D oral model (S 103). In this case, the prosthesis design module 202 can further display reference indexes for the 3D oral model together with the oral image.

The reference indexes include at least one of a lingual archline, a buccal archline, a mesial boundary, a distal boundary, and tooth center point 'c'.

In an embodiment, lines are usually used for the reference indexes, but a point of other symbols for setting the archline or the tooth boundary may also be used. However, a line may be the most effective to intuitionally show a boundary, an arch, etc. in a 2D oral image.

### Oral image display method

The prosthesis design module 202 can display an oral image showing a 3D oral model from a side by controlling the display 240. In this case, the prosthesis design module 202 can provide an interface that controls the view point that is the showing point, so a user can recognize the view point for seeing the 3D oral model through the input unit 210.

In an embodiment, the prosthesis design module 202 can display a 2D oral image in which the view point showing the 3D oral model is fixed in order to a user to intuitionally set the position of a reference index in the 3D oral model.

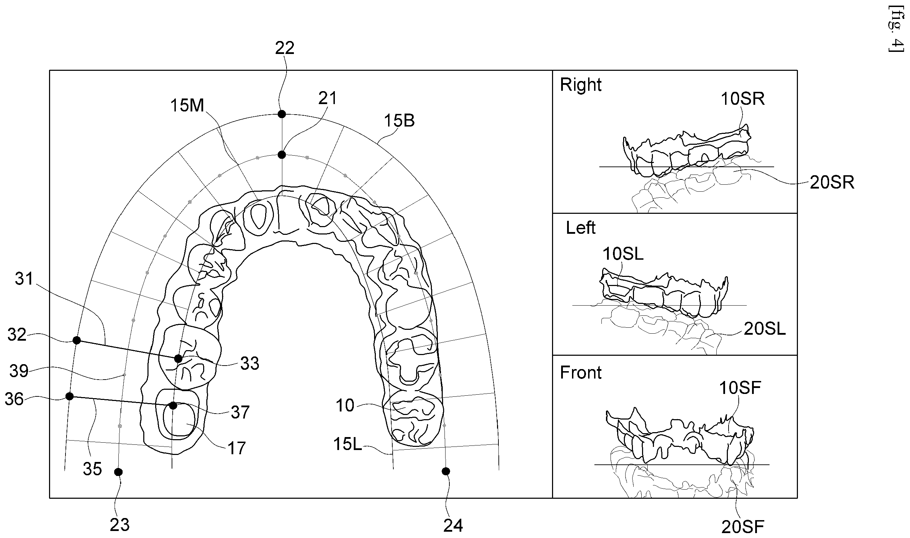

In detail, as shown in FIG. 4, the prosthesis design module 202 can display an oral image 10 that is a top view for a low jaw oral model 20 and can display an oral image 10 that is a bottom view for an upper jaw oral model 10. That is, when initially displaying the 3D oral model in a 2D oral model 10, the prosthesis design module 202 can display an oral image fixed on a plan view (top view or bottom view) point that is a view point at which the entire oral model is checked at a time and a reference index is easily set. As another meaning, the plan view point may refer to a view point vertically seeing the cusp surface of a tooth.

Further, depending on embodiments, the prosthesis design module 202 may display a partial oral image 10 and a reference index. Further, the archline of the reference index when the partial oral image 10 is displayed may be a full arch shape. That is, in an embodiment, the partial oral image 10 is aligned at a position having with respect to the full arch archline in order to check the information (e.g., a position, a size, and a region) that the partial oral image 10 has with respect to the full arc oral image which is missing information of the partial oral image 10.

In an embodiment, the prosthesis design module 202 may further display an upper jaw oral image, a lower jaw oral image, a partial oral image, a side oral image, etc. Hereafter, an entire oral image is defined to refer to an upper jaw oral image or a lower jaw oral image, and the partial oral image is defined to refer to an image of a partial region of the upper jaw or an image of a partial region of the lower jaw.

### 2) Reference index display method

Together with the oral image, the prosthesis design module 202 can further display a reference index.

The reference index may refer to a reference, etc. that is a base for checking a 3D oral model or acquiring oral information.

In detail, referring to FIG. 4, the reference index may include a buccal archline 15B, a lingual archline 15L, and main archline 15M for checking the arrangement direction of all teeth. In this case, the archline may refer to lines such as a bow shape, a U shape, a horseshoe shape, or a semicircular shape that correspond to an oral image.

In this case, the main archline 15M is disposed between the buccal archline 15B and the lingual archline 15L, and may be disposed at the middle position. Further, the buccal archline 15B and the lingual archline 15L may be assistant line displayed to accurately match the main archline 15M to an oral image.

Further, the reference index may include a mesial boundary 31 and a distal boundary 35 for setting the boundary, size, or the like of an individual tooth (or a plurality of teeth).

Further, the mesial boundary 31 and the distal boundary 35 may be straight lines disposed between the buccal archline 15B and the lingual archline 15L. For example, as shown in FIG. 4, a mesial boundary 31 for setting a mesial limit region of the No. 17 tooth and a distal boundary 35 for setting a distal limit region of the tooth of the upper jaw may be further displayed.

Further, an adjustment point for adjusting the shape of each line of the reference index may be further included.

In detail, a first arch adjustment point 22 is disposed at the center point of the buccal archline 15B, thereby being able to adjust the gap between the buccal and lingual archlines 15L.

Further, a second arch adjustment point 21 is disposed at the center point of the main archline 15M, so it can be used to adjust the shape of the main archline 15M. For example, it is possible to change the curvature and the size of the main archline 15M through the second arch adjustment point 21.

Further, a third arch adjustment point 23 and a fourth arch adjustment point 24 are disposed at an end of the main archline 15M, thereby being able to adjust the size of the archline or adjust the curvature of the archline.

Further, tooth boundary adjustment points 32 and 33 are disposed respective at both ends of the mesial boundary 31, thereby being able to adjust the inclination of the mesial boundary 31. Further, it is possible to select any one point of the mesial boundary 31 and change the position of the boundary.

Further, tooth boundary adjustment points 36 and 37 are disposed respective at both ends of the distal boundary 35, thereby being able to adjust the inclination of the distal boundary 35. Further, it is possible to select any one point of the distal boundary 35 and change the position of the boundary.

Further, the tooth center point 'c' may be an index indicate the center of an individual tooth. In an embodiment, when the tooth center point 'c' is selected and moved, the boundaries 331 and 35 of the tooth can be moved together.

These reference indexes are displayed so that the position, etc. of a partial image can be intuitionally understood with respect to the entire mouth, and can provide the reference for the position of each region of a partial image in the entire mouth, so it is possible to acquire more accurate and various oral information when analyzing an oral image in which a reference index is set n the computing device 200.

In an embodiment, a shape in which a reference index is initially displayed (e.g., a curvature and a size) may be a standard shape fixed as a default. For example, a standard reference index having a specified size and curvature stored in advance may be displayed to fit to the size usually showing a modeled oral image.

That is, archlines 15B, 15L and 15M and boundaries 31 and 35 are not archlines respecting the characteristics of only a patient obtained through oral image analysis in accordance with the mouth shape of the patient, but archlines designed and stored by statistically reflecting the shapes of archlines of people.

In order to maximally improve efficiency for a worker, the prosthesis design module 202 displays a standard archline initially displayed with an oral model of a patient as a standard archline fitted to the oral characteristics of the patient.

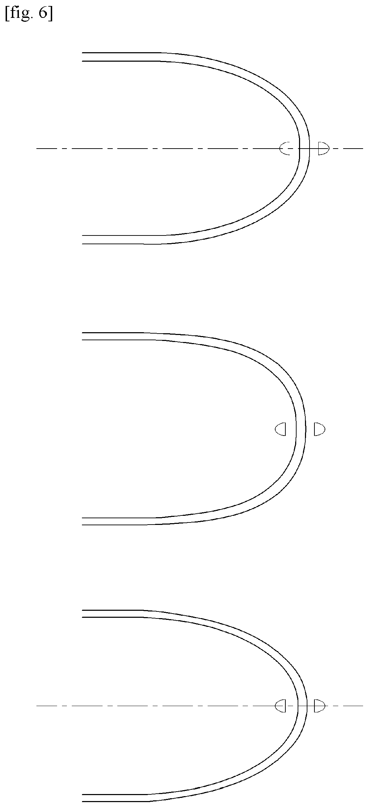

In detail, referring to FIG. 6, a standard archline in an embodiment may include standard archlines having different shapes, that is, a first standard archline (ovoid archline), a second standard archline (square archline), and a third standard archline (tapered archline), and it is possible to select one suitable for the shape of the patient's mouth from the three standard archlines display the one as a standard archline.

The prosthesis design module 202 extracts the shape of a set of teeth from an oral image and automatically selects and displays a standard archline that is the most similar to the first standard archline (ovoid archline), the second standard archline (square archline), and the third standard archline (tapered archline).

In another embodiment, in order to more easily set a reference index in an oral image, the reference index may have a shape corresponding to a shape such as a size or/and a curvature of a displayed oral image.

In detail, the main archline 15M may have a size corresponding (similar) to the size of an entire oral image when the entire oral image is displayed.

Further, the main archline 15M may have a curvature corresponding to an approximate curvature of the entire oral image. Further, the boundaries 31 and 35 may be disposed to correspond to the size and the arrangement direction of an individual tooth.

For example, the prosthesis design module 202 can create the main archline 15M in a size that is proportioned to the size of an entire oral image and can create an archline to have a curvature and a curvature change value that correspond to the curvature and the curvature change value of an entire oral image.

If a partial oral image is displayed, it is possible to estimate the entire oral image of the partial oral image and determine the size and curvature. In detail, it is possible to determine the ratio of a partial oral image to the entire oral image, calculate the size of the entire oral image in accordance with the ratio, and determine the size of an archline to be displayed in accordance with the calculated size of the entire oral image.

### 3) Setting reference index in oral image

Next, the prosthesis design module 202 can set the position relationship between an oral model and a reference index (S104).

In an embodiment, the prosthesis design module 202 can provide an interface that controls the shape (size and/or curvature) and the position of a reference index and the size/position of an oral image. Accordingly, when displayed archline and boundary (240) do not correspond to an oral image, a user can manually set the archline and boundary to correspond to the oral image by adjusting the size/position of the oral image or adjusting the shape and position of the reference index.

Hereafter, a preferred example of a process of setting a reference index in an oral image through a user interface is described in detail.

First, when an oral image 10 is not aligned with a main archline 15M, a user can align the oral image 10 with the main archline 15M through an arrangement interface.

For example, a user can move the oral image 10 to an alignment position within the main archline 15M by dragging the oral image 10 and then adjust the size to correspond to the size of the archline. In this case, the alignment position may refer to that the arrangement direction of teeth and the archline substantially coincide with each other.

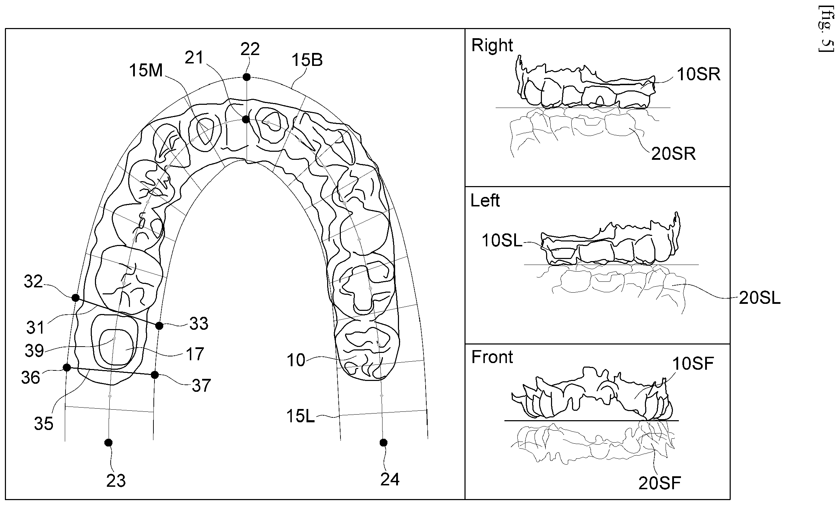

In more detail, referring to FIG. 5, a user can move the oral image 10 such that all teeth in the oral image are disposed between the buccal archline 15B and the lingual archline 15L by dragging the oral image 10, and can match the size of the oral image to the size of the archline by adjusting the size of the oral image. However, the oral image shown in an embodiment is displayed with a size corresponding one to one to the actual teeth for work with high intuition, so it is exemplified that the oral image is matched to a reference index by adjusting the size of the reference index.

In this case, the prosthesis design module provides an interface that removes a displayed image except for archlines, after the oral image is disposed between the buccal archline 15B and the lingual archline 15L, thereby being able to prevent unnecessary image processing.

That is, the buccal archline 15B and the lingual archline 15L set in this way may be used to cut a region out of the buccal and lingual archlines, to show a tooth adjustment point at points crossing the mesial and distal boundaries, and to show a movement limit of the tooth center point.

Next, when the size or the curvature of the main archline 15M is a matter, the user can correct the archline line to correspond to the tooth arrangement direction in the oral image 10 by changing the size and the curvature of the archline by adjusting the arch adjustment point of the main archline 15M.

When the main archline 15M of the oral image is matched, the boundary of an individual tooth can be set through a boundary.

In this case, the user may set only a boundary for a tooth to be corrected. Hereafter, a process of setting a No. 17 tooth region as a reference index.

First, a user can overlap an oral image corresponding to the No. 17 tooth over the No. 17 tooth region of an archline.

To this end, the user can overlap the No. 17 tooth region over the No. 17 tooth image of an oral image 10 by moving the center point 'c' of the No. 17 tooth region from the archline.

Further, the user can set the mesial boundary of the No. 17 tooth by moving the mesial boundary 31 and can set the distal boundary of the No. 17 tooth by moving the distal boundary 35.

Next, the user can designate the direction of the mesial surface of the No. 17 tooth by matching the inclination of the mesial boundary 31 to the image of the No. 17 tooth by adjusting both boundary adjustment points 32 and 33 of the mesial boundary 31.

Further, the user can designate the direction of the distal surface of the No. 17 tooth by matching the inclination of the distal boundary 35 to the image of the No. 17 tooth by adjusting both boundary adjustment points 36 and 37 of the distal boundary 35.

As described above, it is possible to set a reference index in an oral image by manually setting archlines and boundaries for an individual tooth image.

In another embodiment, when an oral image is positioned at an approximate position within an archline and boundary and then an alignment button is pressed, the archline or/and the oral image is changed, so the oral image can be aligned.

However, in an embodiment, the archline may not be an archline matched to a patient mouth obtained by precisely analyzing the oral image of the patient, so if an approximate position is specified, it does not matter in analysis of the oral image based on the archline. Accordingly, unless the gaps between teeth and the archline do not exceed a predetermined difference, it is possible to determine that alignment is achieved and then go to the next step. However, if a gap exceeds the predetermined difference, an embodiment that outputs a warning message and induces more precise alignment may be possible.

In another embodiment, the prosthesis design module 202 can provide an interface that provides first a function of automatically align an oral image with a main archline 15M and then performs manual correction. That is, when pressing or initially displaying an automatic alignment button, a user can align the oral image 10 within the main archline 15M by automatically aligning the oral image 10 within the main archline 15M and then correcting the curvature and size of the main archline 15M and the position of the oral image 10.

On the contrary, the prosthesis design module 202 can provide an interface that more easily aligns the oral image 10 with the main archline 15M by automatically readjusting the size and curvature of the main archline 15M and the size and position of the oral image 10 such that the main archline 15M and the oral image 10 do not overlap each other when a user manually moves the oral image 10 to an approximate position within the main archline 15M.

When the oral model is aligned with the main archline 15M, the prosthesis design module 202 can detect oral information on the basis of the oral image 10 aligned with the main archline 15M (S105).

In this case, the oral information may include inherent characteristic information about the structure of a set of teeth such as the arrangement direction of teeth (e.g., a buccal direction B and a lingual direction L), the arrangement direction of the surface of each tooth, the number of teeth, a side archline (cusp surface-side archline), the structure of a set of teeth, the angles of teeth and between teeth, a tooth angle, and a tooth size, and may further include tooth state information such as the color of a tooth, caries, a carious tooth, damage to a tooth, missing of a tooth, and a prosthetic type 44 of a damage portion.

In order to accurately acquire this oral information, when a reference index that is the reference in analysis of the oral image 10 is set, analysis of the oral image 10 can be more quickly and accurately performed.

In detail, the prosthesis design module 202 can accurately calculate the mesial region, the distal region, the size in one direction (distal and mesial direction), and the arrangement directions of the distal surface and the mesial surface of the corresponding tooth by analyzing a tooth image through the mesial boundary 31 and the distal boundary 35.

Further, the prosthesis design module 202 can accurately calculate the buccal region, the size in the other direction (buccal and lingual directions), and the arrangement direction of the buccal surface and the lingual surface of the corresponding tooth on the basis of that the up, down, left and right of the tooth are proportioned. In detail, the prosthesis design module 202 can analyze the shape of a tooth by finding out the highest coordinates in the buccal direction and the lingual direction in an individual tooth region.

Further, the prosthesis design module 202 can find out an incisal edge connecting cusps by finding out the highest coordinates in the vertical height and the divided regions of an individual tooth.

That is, the prosthesis design module 202 can acquire and display the accurate shape (size, position, and arrangement direction) of a tooth by performing image analysis on an oral image (or a tooth image included therein) on the basis of a reference index including an archline, a boundary, a center point, etc. (S106).

To this end, in the process of matching the reference index, the prosthesis design module 202 can design a precise and accurate virtual prosthesis by designing the virtual prosthesis on the basis of the acquired tooth shape information (S107).

Meanwhile, when it is a partial oral image 10, even if it is a model in which only a portion of a mouth is divided, the prosthesis design module 202 can acquire the direction, the number, etc. of a tooth with respect to the main archline 15M. That is, even if it is an oral model including only a portion of a mouth, the prosthesis design module 202 can acquire various items of oral information about the oral model, so the information can be effectively used to design a prosthesis later.

Further, the prosthesis design module 202 can statistically determine a side archline on the basis of the size, curvature, etc. of the main archline 15M. In detail, a side archline (e.g., an occlusion surface) matched to the size, curvature, and other characteristics of the main archline 15M may be stored in the memory 230, and the prosthesis design module 202 can detect a side archline matched to the main archline 15M with which the oral image 10 is aligned.

An additional side archline may be further displayed in a side oral image 10 that is a side of a 3D oral model, and the side archline may be the base for setting the shape of opposite surface of a prosthesis to be designed later. For example, the inclination of the opposite surface of a prosthesis may correspond to the inclination of a side archline.

In the process of setting a reference index and displaying oral information on the basis of the set reference index, a reference index according to the position relationship with an oral image may also be displayed in the side oral image 10S that is additionally displayed.

Further, the prosthesis design module 202 can more easily detect a tooth number, a tooth size, caries of a tooth, a carious tooth, missing, the degree of damage, etc. on the basis of the main archline 15M, and the information may be used to automatically set parameters of a prosthesis to be designed.

Further, the prosthesis design module 202 can divide the oral image 10 for each tooth on the basis of the acquired oral information, so it is possible to separate and display (240) only teeth required for prosthesis design.

As described above, the prosthesis design module 202 can considerably help a user to intuitionally check the oral state by displaying the oral image 10 with respect to the main archline 15M, can acquire various and accurate items of oral information by performing image analysis on the oral image 10 on the basis of the main archline 15M, and can help design a prosthesis on the basis of the oral information, so it is possible to more easily and quickly design a prosthesis.

### - Prosthesis design method

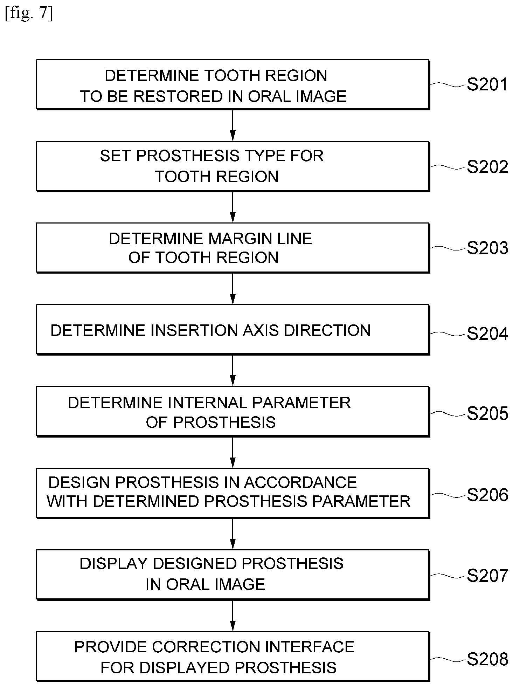

Hereafter, a method of easily and precisely design a prosthesis in accordance with sequential steps on the basis of oral information acquired in this way and an oral image is described with reference to FIGS. 7 to 13.

The prosthesis design module 202 according to an embodiment can provide a prosthesis design interface that designs a prosthesis in accordance with sequential steps on the basis of oral information obtained by analyzing an oral model on the basis of an oral image showing a 3D oral model and an archline. In detail, the prosthesis design interface determines parameters for designing a prosthesis sequentially in each step while providing appropriate oral information for each step, and combines and corrects the determined parameters and oral information with an oral image, whereby a user can effectively and easily design a prosthesis.

In this case, the prosthesis design parameters may include at least one or more parameters of a tooth region to be restored, a prosthesis type, a margin line, an insertion axis, internal parameters of a prosthesis (e.g., a minimum thickness, a margin thickness, a cement gap, a contact distance, and a pontic base gap), a prosthesis size, a teeth arrangement direction, a side archline, and the number of the tooth to be restored.

The prosthesis design parameters are manually set by a user in accordance with the prosthesis design interface and may be automatically set by oral information acquired by analyzing an oral image on the basis of an archline.

First, referring to FIG. 7, the prosthesis design module 202, first, can determine a tooth region to be restored in an oral image showing 3D oral model (S201).

In an embodiment, the prosthesis design module 202 can determine a partial region of the oral image as a tooth region on the basis of user input for the displayed oral image. For example, a user can select a tooth region to be restored by designating a specific point, a specific region, or a specific tooth in the oral image.

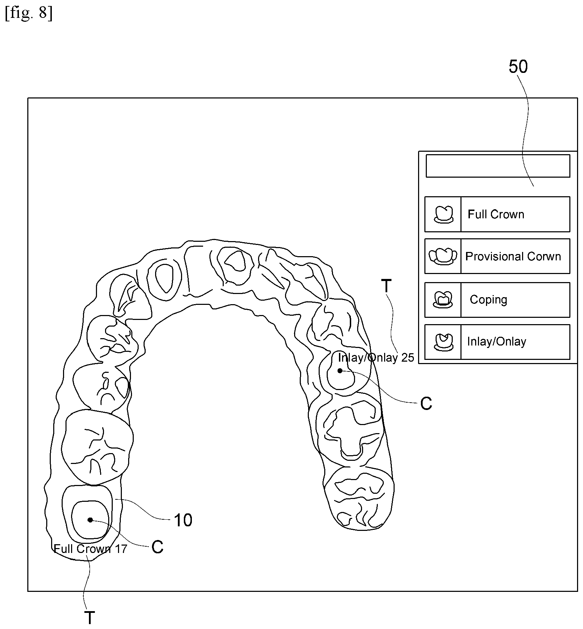

In detail, referring to FIG. 8, when an oral image is displayed and a specific point 'c' is selected in the oral image by a user, the prosthesis design module 202 can select the selected specific point 'c' and the region around the specific point 'c' as a tooth region to be restored.

In an embodiment, the tooth region may be a region for designing one prosthesis. In detail, the tooth region is a region for designing a prosthesis for one tooth, and when one point is selected by a user, one prosthesis for a damaged tooth at the selected point may be designed. Accordingly, the prosthesis design module 202 can extract the tooth number T of the damaged tooth from the oral information and provide a prosthesis matched to the tooth number to be designed.

Further, the specific point 'c' in the tooth region selected by the user may be a center point at which the designed virtual prosthesis is disposed later. Accordingly, in order to minimize position correction of a prosthesis, the specific point 'c' is preferably positioned at the center of the tooth region to be restored. The prosthesis design module 202 calculates the center of the tooth region to be restored, and when the prosthesis design module 202 determines the distance between the calculated center and the specific point 'c' exceeds a predetermined distance, the prosthesis design module 202 can provide an interface that shows the fact and resets the specific point 'c'.

Further, the prosthesis design module 202 can more accurately determine a tooth region to be restored on the basis of the analyzed oral information. In detail, the prosthesis design module 202 may detect a damaged tooth in an oral image, and may determine the region occupied by the corresponding tooth as a tooth region to be restored when receiving designation input from a user in the region occupied by the damaged tooth.

In another embodiment, the prosthesis design module 202 can automatically detect a damaged tooth in a displayed oral image and determine the region of the tooth as a tooth region to be restored. In this case, the prosthesis design module 202 can calculate the center point of the determined tooth region and can dispose a virtual prosthesis designed later at the calculated center point.

When a tooth region to the restored is selected, the prosthesis design module 202 can determine the type of a prosthesis to be designed in the tooth region (S202).

In this case, the types of the prosthesis may include inlay, onlay, crown, laminate, bridge, coping, implant, denture, or the like. Further, the prosthesis, in a broad meaning, may include even tooth-related assistants such as a surgical guide and a brace.

In detail, the prosthesis design module 202 can provide a user with an interface that arranges the types of a prosthesis to be designed in the tooth region and selects one of the types. For example, as shown in FIG. 8, when use selects a specific point 'c' of a tooth region to the restored through double-clicking, prosthesis types 50 for restoring are arranged around the tooth region and one of them is selected by the user, whereby a prosthesis type can be determined.

In this case, the prosthesis design module 202 can reduce the time for designing a prosthesis by receiving setting input for a plurality of tooth regions from the user and providing a plurality of prostheses at a time to be designed.

For example, as shown in FIG. 8, it may be possible to simultaneously design two prostheses through one sequential prosthesis design step by simultaneously selecting two tooth regions and then performing a prosthesis design parameter setting step.

As a result, a user determines a first point as a tooth region to the restored in an oral image by designating the first point, the tooth number of the determined tooth region is displayed, a prosthesis of the tooth region is selected, and this process is repeated when there is another tooth region to be restored, whereby it is possible to complete setting prosthesis design parameters in a first step.

In another embodiment, the prosthesis design module 202 can analyze the degree of damage of a damaged tooth in a tooth region and can automatically determine a prosthesis to be designed in accordance with the degree of damage.

When the prosthesis type is set, the prosthesis design module 202 can determine a margin line of the tooth region to be restored (S203).

In detail, the prosthesis design module 202 can determine a margin line that is the boundary between a prosthesis and a tooth (or the boundary between a prosthesis and a gum) in the tooth region.

In order to determine the margin line, the prosthesis design module 202 may be provided to manually, semiautomatically, or automatically design a margin line.

First, when a user selects an automatic mode, the prosthesis design module 202 can detect the gum in a tooth region in an oral image, a color difference between gum regions, a damaged tooth, the root of a tooth, an adjacent tooth, etc., and can determine and display a margin line in the oral image on the basis of these items of information. Further, the prosthesis design module 202 can provide a correction interface that manually corrects an automatically determined margin line.

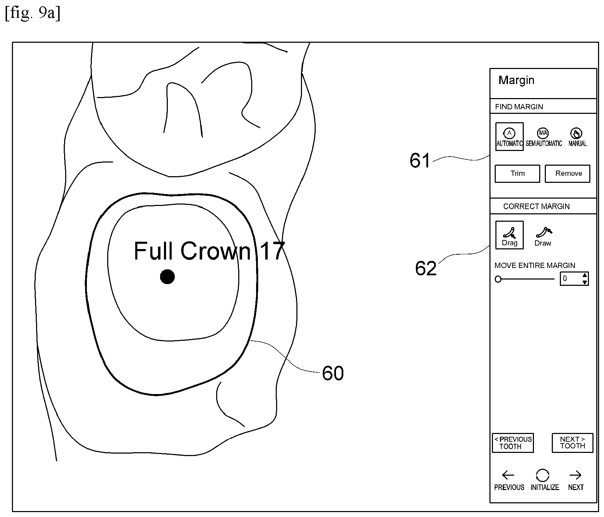

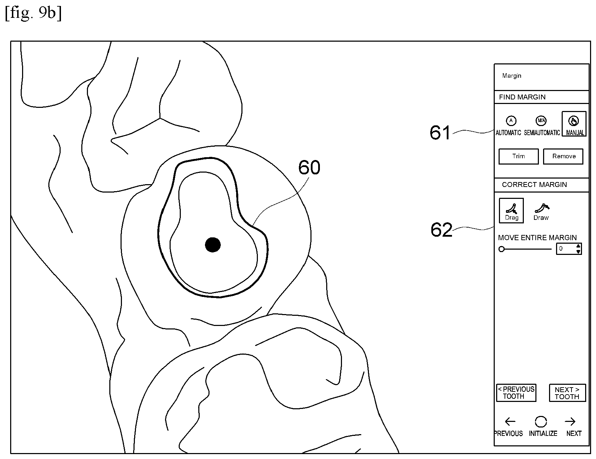

For example, referring to FIG. 9, the prosthesis design module 202 can provide a correction interface 62 that automatically displays a margin line 60 in a tooth region and corrects the margin line 60 in accordance with drag input from a user, a correction interface 62 that corrects the margin line 60 in accordance with draw input from a user, and a correction interface that moves the entire margin line 60 up and down or left and right.

Further, the prosthesis design module 202 may be provided to directly draw a margin line 60 in an oral image in accordance with drag input from a user, as shown in FIG. 9, when a manual mode is selected, and may be provided to draw a margin line 60 in an oral image in accordance with draw input from a user.

When the margin line 60 is determined, the prosthesis design module 202 can determine an insertion axis that is the insertion direction of the prosthesis (S204).

In an embodiment, the prosthesis design module 202 may be provided to set an insertion axis a view point showing the oral image.

In detail, the prosthesis design module 202 can control an oral image to be displayed by a user changing the view point showing a 3D oral model, and when a user changes the view point and then selects the changed view point as an insertion axis direction in an insertion axis direction determination step, the prosthesis design module 202 can set the view point as an insertion axis direction.

In this case, the prosthesis design module 202 can induce the user to correctly select the view point as the insertion axis direction by displaying the view point direction and a blackout region, which is a region in which a prosthesis is blocked when the prosthesis is inserted, in the oral image.

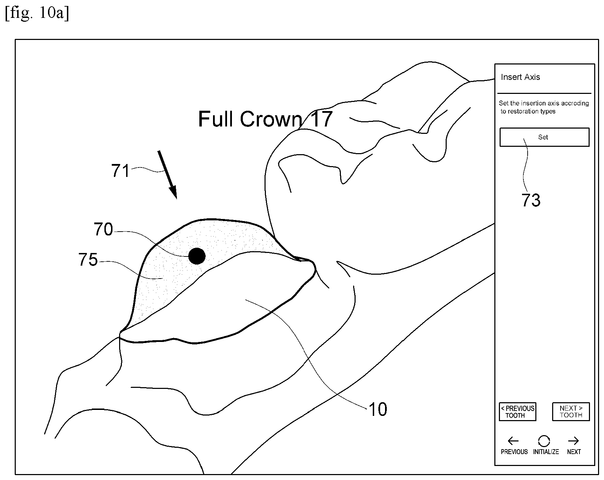

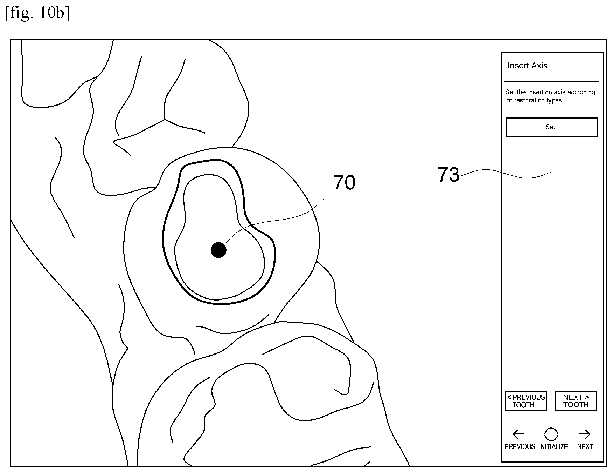

For example, referring to FIG. 10A, a view point showing an oral image 10 may be displayed by an arrow 71 in the oral image 10, and when a prosthesis is inserted in the direction of the arrow 71, a blackout region 75 is indicated by a different color, thereby being able to induce a user to intuitionally select a correct insertion axis direction.

Further, referring to FIG. 10A, when the direction showing an oral image is a top view or a bottom view, the arrow 71 indicating the view point may be omitted, and if there is no blackout at the view point, a blackout region is not displayed. Accordingly, a user can easily set the view point by pressing a set button 73 for selecting an insertion axis direction.

When the insertion axis direction is set, the prosthesis design module 202 can determine a prosthesis parameter (S205).

In detail, in an embodiment, the prosthesis design module 202 can determine an internal parameter of a prosthesis not determined yet and a parameter related to the outer shape of the prosthesis in prosthesis design parameters.

In this case, the internal parameter of a prosthesis may include at least one of a minimum thickness of the prosthesis, a margin thickness, a cement gap, a contact distance, and a pontic base gap.

The internal parameters of a prosthesis may be basically set as values that are statistically used in dental surgery, and accordingly, a step of setting an internal parameter of a prosthesis may be a step of checking again and correcting the basic setting or a user setting value.

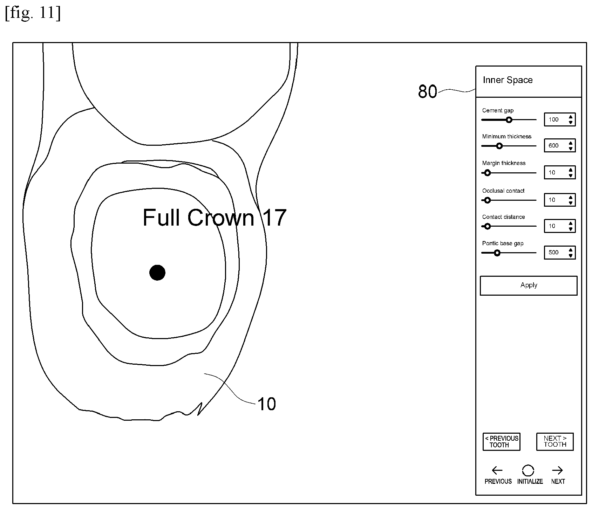

For example, referring to FIG. 11, in the step of setting an internal parameter of a prosthesis, internal parameters 80 of a prosthesis are arranged and setting values of the parameters are displayed, and an interface that changes the setting values may be provided.

As described above, an internal parameter of a prosthesis is determined, the prosthesis design module 202 can design a virtual prosthesis in accordance with the determined prosthesis parameter (S206).

In detail, the prosthesis design module 202 can detect a prosthesis shape matched with the set prosthesis design parameter from a library.

For example, the prosthesis design module 202 can detect a prosthesis shape matched with a tooth number and a prosthesis type from a library 95.

Further, the prosthesis design module 202 can change the detected prosthesis shape in accordance with a prosthesis design parameter or oral information.

For example, the prosthesis design module 202 can change the detected prosthesis shape in accordance with the margin line 60 or an internal parameter of the prosthesis.

Further, the prosthesis design module 202 can change the top surface of the detected prosthesis shape to be inclined in accordance with a side archline.

When a virtual prosthesis is designed, the prosthesis design module 202 can overlap and display the designed virtual prosthesis over the oral image (S207).

In detail, the prosthesis design module 202 disposes and displays the designed virtual prosthesis on the oral image on the basis of the prosthesis design parameter or/and the oral information.

For example, the prosthesis design module 202 dispose the specific point 'c' (e.g., the center point) of the tooth region to the center of the virtual prosthesis, and in this case, the disposition direction of the virtual prosthesis may be determined in accordance with the insertion axis direction and the teeth alignment directions (B and L).

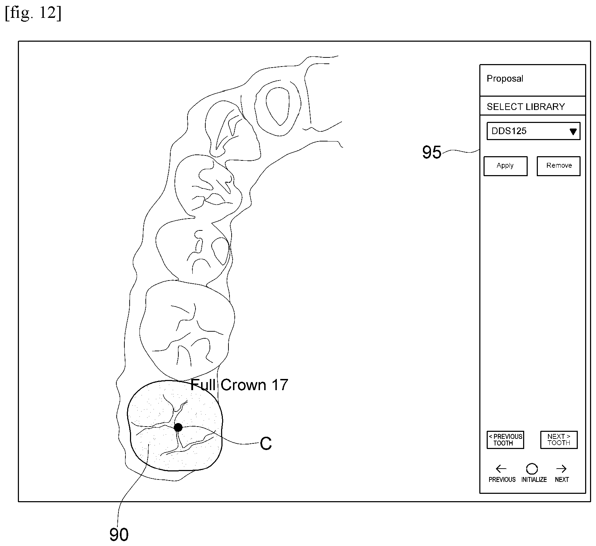

Referring to FIG. 12, the prosthesis design module 202 can position the center of a virtual prosthesis 90 at a specific point 'c' in a tooth region and can match the disposition direction (e.g., horizontal and vertical rotation directions) of the virtual prosthesis 90 to the insertion axis direction and the teeth alignment direction in the tooth region.

When the virtual prosthesis 90 is displayed in the oral image, the prosthesis design module 202 can provide an interface that can manually correct the virtual prosthesis 90 (S208).

In detail, the prosthesis design module 202 can provide a correction interface that can correct the virtual prosthesis 90 while checking the virtual prosthesis 90 that is corrected in real time in accordance with correction input from a user on the basis of the virtual prosthesis 90 combined and displayed in the oral image.

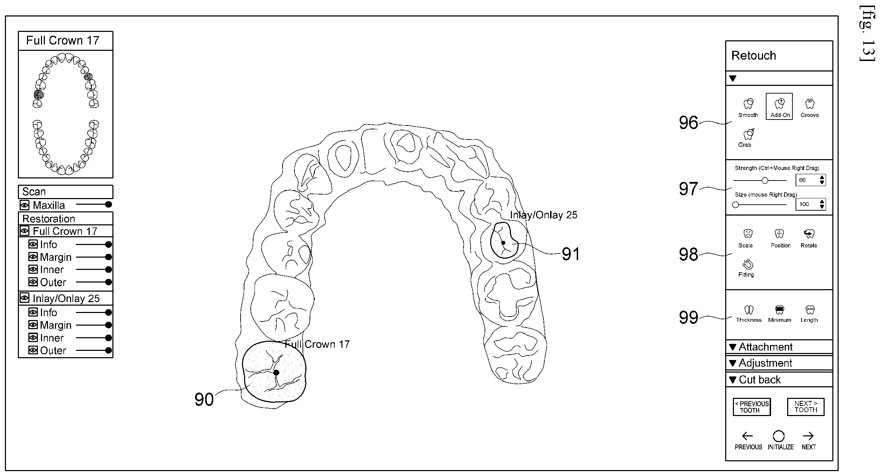

In this case, a parameter that can correct the virtual prosthesis 90, as shown in FIG. 13, may include external shape parameters 96 of the virtual prosthesis 90 such as groove, smooth, add-on, and grab, a parameter 97 related to the strength and thickness of the virtual prosthesis 90, a disposition parameter 98 related to the scale, position, and rotation of the virtual prosthesis 90, and an internal parameter 99 of a prosthesis.

A user can know that the virtual prosthesis 90 displayed in the oral image is changed in real time by correcting the parameters, so the user can easily and intuitionally correct the design of the virtual prosthesis 90.

As described above, the prosthesis design module 202 can provide a prosthesis design interface that can easily design prostheses with uniform quality regardless of the skillfulness of a user by sequentially setting prosthesis design parameters in accordance with steps.

Further, the prosthesis design module 202 can induce a prosthesis parameter to be more accurately and quickly set by effectively providing oral information acquired on the basis of an archline when setting each of the steps of setting a prosthesis design parameter.

Further, the prosthesis design module 202 can provide a prosthesis design correction interface that can effectively check whether the design of the virtual prosthesis 90 is correct by disposing the virtual prosthesis 90 at an accurate position in the oral image, and can correct the displayed virtual prosthesis 90 into an intuitive interface while seeing the virtual prosthesis 90.

Embodiments of the present disclosure described above may be implemented in the type of program commands the can be executed through various computer components, and may be recorded on a computer-readable recording medium. The computer-readable recording medium may include program commands, data files, and data structures individually or in combinations thereof. The program commands that are recorded on a computer-readable recording medium may be those specifically designed and configured for the present invention or may be those available and known to those engaged in computer software in the art. The computer-readable recording medium includes magnetic media such as hard disks, floppy disks, and magnetic media such as a magnetic tape, optical media such as CD-ROMs and DVDs, magneto-optical media such as floptical disks, and hardware devices specifically configured to store and execute program commands, such as ROM, RAM, and flash memory. The program commands include not only machine language codes compiled by a compiler, but also high-level language code that can be executed by a computer using an interpreter etc. A hardware device may be changed into one or more software module to perform the processes according to the present disclosure, and vice versa.

Specific execution described herein is embodiments and does not limit the present disclosure in any way. For briefness of the specification, electronic components, control systems, and software of the related art, and other functions of the system may not be described. Furthermore, wire connection and connecting members of components shown in the figures are examples of functional connection and/or physical or circuit connections, and in actual devices, they may be replaceable or may be shown as various additional functional connection, physical connection, or circuit connection. Unless stated in detail such as "necessary" and "important", they may not be necessary component for the present disclosure.

Although exemplary embodiments of the present disclosure were described above, it should be understood that the present disclosure may be changed and modified in various ways by those skilled in the art without departing from the scope of the present disclosure described in the following claims. Therefore, the technical scope of the present disclosure is not limited to the exemplary embodiments described herein, but is determined by the claims.

### INDUSTRIAL AVAILABILITY

Since the present disclosure is a technology about an oral scanner required for performing dental treatment in a modernized way and designing a prosthesis on the basis a 3D oral model created by oral scanning, it has an industrial applicability.

## Claims

1. A method for analyzing a 3D oral model, the method comprising:
displaying a 3D oral model as an oral image;
displaying a reference index together with the oral image;
setting the reference index in the oral image;
acquiring oral information by analyzing the oral image on the basis of the set reference index; and
designing a virtual prosthesis on the basis of the oral information,
wherein the reference index includes at least one of a lingual archline (15L), a buccal archline (15B), a main archline (15M), a mesial boundary (31), and a distal boundary (35),
the setting of the reference index in the oral image includes:
providing a manual interface that moves a shape and a position of the oral image; and
providing a manual interface that moves a shape and a position of the reference index, the acquiring of oral information includes acquiring a prosthesis design parameter by analyzing the oral image aligned in accordance with the manual interfaces on the basis of the reference index, and
designing the virtual prosthesis on the basis of the prosthesis design parameter, **characterized by** the fact that
the reference index is set to a first standard archline, a second standard archline and a third standard archline that are designed by statistically reflecting shapes of archlines of people,
the displaying a reference index together with the oral image includes:
extracting the shape of a set of teeth from the oral image, and
automatically selecting and displaying one of the first to the third standard archlines, wherein the selected standard archline is the most similar to the shape of the set of teeth extracted from the oral image.

2. The method of claim 1, further comprising matching a matching relationship of an upper jaw oral model and a lower jaw oral model,
wherein when the reference index is set in one of the upper jaw oral model and the lower jaw oral model, the reference index is set in the other one oral model on the basis of the matching relationship.

3. The method of claim 1, wherein the displaying of a reference index together with the oral image includes:
displaying an archline together with a first oral image showing a cusp surface of a tooth in the 3D oral model; and
displaying a side archline together with a second oral image showing an opposite surface of a tooth in the 3D oral model.

4. The method of claim 3, wherein the side archline is matched to the archline aligned with the first oral image.

5. The method of claim 4, wherein the reference index includes at least one of a lingual archline (15L), a buccal archline (15M), a main archline (15M), a mesial boundary (32), a distal boundary (36), or tooth center point 'c'.

6. The method of claim 5, wherein the providing of a manual interface that moves a shape and a position of the reference index includes:
adjusting a gap between buccal (15B) and lingual archlines (15L) with a first arch adjustment point disposed at a center point of the buccal archline (15B);
adjusting a curvature of an archline with a second arch adjustment points disposed at center points of the buccal archline (15B) and the lingual archline (15L); and
adjusting a length or a curvature of the buccal archline (15B) or the lingual archline (15L) with a third arch adjustment point and a fourth arch adjustment point disposed at ends of the buccal archline (15B) and the lingual archline (15L).

7. The method of claim 5, wherein the providing of a manual interface that moves a shape and a position of the reference index includes:
moving the boundaries connected with the tooth center point by moving the tooth center point;
moving a tooth boundary including the mesial boundary (32) and the distal boundary (36); and
adjusting an inclination of the tooth boundary.

8. The method of claim 7, wherein the acquiring of oral information includes acquiring one or more items of information of a mesial region, a distal region, a size in one direction (distal and mesial direction) of a corresponding tooth, or disposition directions of a distal surface and a mesial surface of the tooth by analyzing a tooth image on the basis of the tooth boundary.

9. The method of claim 8, wherein the acquiring of oral information includes acquiring at least one or more items of information on a buccal region, a lingual region, a size in another direction (buccal and lingual direction) of the corresponding tooth, or a disposition direction of a buccal surface and a lingual surface by finding out highest coordinates in the buccal direction and the lingual direction in an individual tooth region set through the boundary.

10. The method of claim 5, wherein the setting of the reference index in the oral image includes:
disposing the oral image between the buccal archline (15B) and the lingual archline (15L);
removing an oral image except for the archline; and
setting the mesial boundary (32) and the distal boundary (36) of an individual tooth region to be restored by moving the tooth center point.

## Patentansprüche

1. Verfahren zum Analysieren eines oralen 3D-Modells, wobei das Verfahren umfasst:
Anzeigen eines oralen 3D-Modells als ein orales Bild;
Anzeigen eines Referenzindex zusammen mit dem oralen Bild;
Einstellen des Referenzindex in dem oralen Bild;
Erfassen von oraler Information durch Analysieren des oralen Bilds auf der Basis des eingestellten Referenzindex; und
Designen einer virtuellen Prothese auf der Basis der oralen Information,
wobei der Referenzindex wenigstens eine von einer lingualen Bogenlinie (15L), einer bukkalen Bogenlinie (15B), einer Hauptbogenlinie (15M), einer mesialen Grenze (31), und einer distalen Grenze (35) umfasst,
das Einstellen des Referenzindex in dem oralen Bild umfasst:
Bereitstellen einer manuellen Schnittstelle, die eine Form und eine Position des oralen Bilds bewegt; und
Bereitstellen einer manuellen Schnittstelle, die eine Form und eine Position des Referenzindex bewegt;
das Erfassen von oraler Information ein Erfassen eines Prothesendesignparameters durch Analysieren des gemäß den manuellen Schnittstellen ausgerichteten oralen Bilds auf der Basis des Referenzindex umfasst, und
Designen der virtuellen Prothese auf der Basis der Prothesendesignparameter,
**dadurch gekennzeichnet, dass**
der Referenzindex auf eine erste Standardbogenlinie, eine zweite Standardbogenlinie und eine dritte Standardbogenlinie eingestellt wird, die durch statistisches Reflektieren von Formen von Bogenlinien von Leuten designt werden,
das Anzeigen eines Referenzindex zusammen mit dem oralen Bild umfasst:
Extrahieren der Form eines Satzes von Zähnen aus dem oralen Bild, und
automatisches Auswählen und Anzeigen von einer der ersten bis dritten Standardbogenlinien, wobei die ausgewählte Standardbogenlinie die ist, die der aus dem oralen Bild extrahierten Form des Satzes von Zähnen am ähnlichsten ist.

2. Verfahren nach Anspruch 1, ferner umfassend ein Abgleichen einer zusammenpassenden Beziehung eines oralen Oberkiefermodells und eines oralen Unterkiefermodells,
wobei, wenn der Referenzindex in einem des oralen Oberkiefermodells und des oralen Unterkiefermodells eingestellt wird, der Referenzindex in dem anderen oralen Modell auf der Basis der zusammenpassenden Beziehung eingestellt wird.

3. Verfahren nach Anspruch 1, wobei das Anzeigen eines Referenzindex zusammen mit dem oralen Bild umfasst:
Anzeigen einer Bogenlinie zusammen mit einem ersten oralen Bild, das eine Höckeroberfläche eines Zahns in dem oralen 3D-Modell zeigt; und
Anzeigen einer Seitenbogenlinie zusammen mit einem zweiten oralen Bild, das eine gegenüberliegende Oberfläche eines Zahns in dem oralen 3D-Modell zeigt.

4. Verfahren nach Anspruch 3, wobei die Seitenbogenlinie mit der Bogenlinie abgeglichen wird, die mit dem ersten oralen Bild ausgerichtet wurde.

5. Verfahren nach Anspruch 4, wobei der Referenzindex wenigstens eine von einer lingualen Bogenlinie (15L), einer bukkalen Bogenlinie (15B), einer Hauptbogenlinie (15M), einer mesialen Grenze (31), einer distalen Grenze (35), oder einem Zahnmittelpunkt 'c' umfasst.

6. Verfahren nach Anspruch 5, wobei das Bereitstellen einer manuellen Schnittstelle, die eine Form und eine Position des Referenzindex bewegt, umfasst:
Anpassen eines Spalts zwischen bukkalen (15B) und lingualen (15L) Bogenlinien, wobei ein erster Bogenanpassungspunkt an einem Mittelpunkt der bukkalen Bogenlinie (15B) angeordnet ist;
Anpassen einer Krümmung einer Bogenlinie, wobei ein zweiter Bogenanpassungspunkt an Mittelpunkten der bukkalen Bogenlinie (15B) und der lingualen Bogenlinie (15L) angeordnet ist; und
Anpassen einer Länge oder einer Krümmung der bukkalen Bogenlinie (15B) oder der lingualen Bogenlinie (15L), wobei ein dritter Bogenanpassungspunkt und ein vierter Bogenanpassungspunkt an Enden der bukkalen Bogenlinie (15B) und der lingualen Bogenlinie (15L) angeordnet sind.

7. Verfahren nach Anspruch 5, wobei das Bereitstellen einer manuellen Schnittstelle, die eine Form und eine Position des Referenzindex bewegt, umfasst:
Bewegen der Grenzen, die mit dem Zahnmittelpunkt verbunden sind, durch Bewegen des Zahnmittelpunkts;
Bewegen einer Zahngrenze umfassend die mesiale Grenze (32) und die distale Grenze (36); und
Anpassen einer Neigung der Zahngrenze.

8. Verfahren nach Anspruch 7, wobei das Erfassen von oraler Information ein Erfassen von einem oder mehreren Informationsgegenständen einer mesialen Region, einer distalen Region, einer Größe in einer Richtung (distaler und mesialer Richtung) eines entsprechenden Zahns, oder Anordnungsrichtungen einer distalen Oberfläche und einer mesialen Oberfläche des Zahns durch Analysieren eines Zahnbilds auf der Basis der Zahngrenze umfasst.

9. Verfahren nach Anspruch 8, wobei das Erfassen von oraler Information ein Erfassen von wenigstens einem oder mehreren Informationsgegenständen einer bukkalen Region, einer lingualen Region, einer Größe in einer anderen Richtung (bukkaler und lingualer Richtung) des entsprechenden Zahns, oder einer Anordnungsrichtung einer bukkalen Oberfläche und einer lingualen Oberfläche durch Herausfinden von höchsten Koordinaten in der bukkalen Richtung und der lingualen Richtung in einer durch die Grenze eingestellten individuellen Zahnregion umfasst.

10. Verfahren nach Anspruch 5, wobei das Einstellen des Referenzindex in dem oralen Bild umfasst:
Anordnen des oralen Bilds zwischen der bukkalen Bogenlinie (15B) und der lingualen Bogenlinie (15L);
Entfernen eines oralen Bilds mit Ausnahme der Bogenlinie; und
Einstellen der mesialen Grenze (32) und der distalen Grenze (36) einer individuellen Zahnregion, die wiederherzustellen ist, durch Bewegen des Zahnmittelpunkts.

## Revendications

1. Méthode pour analyser un modèle oral 3D, la méthode comprenant :
l'exposition d'un modèle oral 3D comme une image orale,
l'affichage d'un index de référence conjointement avec l'image orale,
l'introduction de l'index de référence dans l'image orale,
l'acquisition d'informations orales en analysant l'image orale sur la base de l'index de référence introduit, et
la désignation d'une prothèse virtuelle sur la base des informations orales,
dans laquelle l'index de référence inclut au moins une architecture Archline linguale (15L), une architecture Archline buccale (15B), une architecture Archline principale (15M), une frontière mésiale (31), et une frontière distale (35),
l'affichage de l'index de référence dans l'image orale comprenant :
l'introduction d'une interface manuelle qui déplace une forme et une position de l'image orale, et
la fourniture d'une interface manuelle qui déplace une forme et une position de l'index de référence, l'acquisition d'informations orales incluant l'acquisition d'un paramètre de conception de prothèse en analysant l'image orale alignée en concordance avec les interfaces manuelles sur la base de l'index de référence, et
la désignation d'une prothèse virtuelle sur la base d'un paramètre de conception de prothèse, et
**caractérisée en ce que** :
l'index de référence est positionné sur une première architecture Archline standard, une deuxième architecture Archline standard et une troisième architecture Archline standard qui sont désignées par les formes réfléchissantes statistiques des architectures Archline des personnes,
l'affichage d'un index de référence conjointement avec l'image orale comprend :
l'extraction de la forme d'un ensemble de dents à partir de l'image orale, et
la sélection et l'affichage automatique d'une des architectures Archline standard de la première à la troisième,
où l'architecture Archline standard sélectionnée est la plus similaire à la forme de l'ensemble des dents extrait de l'image orale.

2. Méthode selon la revendication 1 comprenant de plus le jumelage d'un modèle oral d'une mâchoire supérieure et d'un modèle oral d'une mâchoire inférieure,
où lorsque l'index de référence est positionné dans un d'un modèle oral de la mâchoire supérieure et d'un modèle oral de la mâchoire inférieure, l'index de référence est positionné dans l'autre modèle oral sur la base de la relation de jumelage.

3. Méthode selon la revendication 1 dans laquelle l'affichage de l'index de référence conjointement avec les images orales comprend :
l'affichage d'une architecture Archline conjointement avec la première image orale montrant une surface cupside d'une dent dans un modèle oral 3D, et
l'affichage d'une architecture Archline latérale conjointement avec la deuxième image orale montrant la surface opposée de la dent dans le modèle oral 3D.

4. Méthode selon la revendication 3 selon laquelle l'architecture Archline latérale correspond à l'architecture Archline alignée avec la première image orale.

5. Méthode selon la revendication 4 dans laquelle l'index de référence inclut au moins une parmi l'architecture Archline linguale (15L), l'architecture Archline buccale (15M), une architecture Archline principale (15M), une frontière mésiale (32) et une frontière distale (36) ou un point centre de dent 'c'.

6. Méthode selon la revendication 5 dans laquelle la fourniture d'une interface manuelle qui déplace une forme et une position de l'index de référence inclut :
la fixation d'un espace entre les architectures Archline buccale (15B) et linguale (15L) avec un premier point d'ajustement d'arc disposé en un point central de l'architecture Archline buccale (15B),
l'ajustement de la courbure d'une architecture Archline avec un second point d'ajustement d'arc disposé en un point central de l'architecture Archline buccale (15B) et de l'architecture Archline linguale (15L), et
l'ajustement de longueur ou d'une courbure de l'architecture Archline buccale (15B) et l'architecture Archline linguale (15L) avec un troisième point d'ajustement d'arc et un quatrième point d'ajustement d'arc disposé aux extrémités de l'architecture Archline buccale (15B) et de l'architecture Archline linguale (15L).

7. Méthode selon la revendication 5 dans laquelle la fourniture d'une interface manuelle qui déplace une forme et une position de l'index de référence comprend :
le déplacement des frontières reliées avec le point central de dent en déplaçant le point central de dent,
le déplacement de la limite dentaire incorporant le frontière mésiale (32) et la frontière distale (6), et
l'ajustement de l'inclinaison de la limite dentaire.

8. Méthode selon la revendication 7 dans laquelle l'acquisition d'information orale inclut l'acquisition d'un ou plusieurs points d'information d'une région mésiale, une région distale, la dimension dans une direction (direction mésiale ou distale) d'une dent correspondante, ou des directions de disposition de la surface distale et d'une surface mésiale de la dent en analysant l'image dentaire sur la base de la limite dentaire.

9. Méthode selon la revendication 8 dans laquelle l'acquisition d'information orale inclut l'acquisition d'au moins un ou plusieurs points d'information d'une région buccale, d'une région linguale, une dimension dans une autre direction (direction buccale ou linguale) de la dent correspondante, ou une direction de disposition de la surface buccale et de la surface linguale en trouvant les coordonnées les plus élevées dans la direction buccale et la direction linguale dans une région dentaire individuelle disposé dans la frontière.

10. Méthode selon la revendication 5 dans laquelle l'établissement de l'index dans l'image orale inclut :
la disposition de l'image orale entre l'architecture Archline buccale (15B) et l'architecture Archline linguale (15L),
le déplacement d'une image orale excepté pour l'architecture Archline, et
l'établissement de la frontière mésiale (32) et la frontière distale (36) d'une région individuelle dentaire à restaurer en déplaçant le point central de dent.
